# EUROPÄISCHE PATENTANMELDUNG

(11) **EP 1 072 732 A1**
(43) Veröffentlichungstag der Anmeldung: **31.01.2001**
(21) Anmeldenummer: 00115849.2
(22) Anmeldetag: 24.07.2000
(51) Int. Cl.: E04D 1/36, E04D 5/10, E04D 13/14, B29C 70/88

(54) **Plastisch verformbare Materialbahn**

(30) Priorität: 23.07.1999 DE 19934060
(71) Anmelder: Röttger, Wilhelm, 36358 Herbstein (DE); Klöckner, Albrecht, 51588 Nümbrecht (DE)
(72) Erfinder: RÖTTGER Wilhelm, 36358 Herbstein (DE); KLÖCKNER Albrecht, 51588 Nümbrecht (DE); RÖTTGER Lars, 63150 Heusenstamm (DE)
(74) Vertreter: Habersack, Hans-Jürgen, Dipl.-Ing.

(57) **Zusammenfassung**

Die Erfindung betrifft eine plastisch verformbare Materialbahn, die ein plastisch modellierbares Gitternetz (1) und mindestens eine verformbare Abdeckmaterialschicht (3) umfaßt, mit der das Gitternetz beschichtet ist. Damit die Abdeckmaterialschicht (3) nicht durch die Verformungen des Gitternetzes örtlich übermäßig gedehnt wird, ist das Gitternetz (1) über eine Grenzschicht (2) in Form einer Grenzkleberschicht mit der Abdeckmaterialschicht (3) verbunden.

## Beschreibung

Die Erfindung betrifft eine plastisch verformbare Gitternetzbahn mit einer Beschichtung gemäß dem Oberbegriff von Anspruch 1, und ein Verfahren zur Herstellung einer solchen Materialbahn gemäß dem Oberbegriff von Anspruch 12 oder 16.

Im Stand der Technik sind derartig beschichtete Gitternetzbahnen bekannt, die beispielsweise unter dem Begriff "Bleiersatz" im Bedachungsbereich Anwendung finden und zu Abdeckungs- und Abdichtungszwecken eingesetzt werden. Sie haben die Aufgabe, Problemzonen im Dachbereich wetterbeständig abzudecken und abzudichten, wie das beispielsweise bei Kaminen und Dachfenstern der Fall ist. Um dieser Funktion möglichst gerecht zu werden, ist es erforderlich, daß die Materialbahn sehr gut an das Dachprofil angepaßt werden kann.

Gängige Typen weisen aus diesem Grund eine plastisch verformbare Struktur in Form eines Gitternetzes, insbesondere eines Streckmetallgitters auf, die mit dem abdichtenden Material ummantelt bzw. beschichtet ist. In den verschiedenen Fertigungsverfahren wird dabei entweder die Beschichtung auf das Streckmetallgitter aufgetragen oder umgekehrt das Streckmetallgitter durch Aufwalzen in die Beschichtung gedrückt.

Aus der DE 43 19 993 A1 ist eine plastisch verformbare Materialbahn bekannt, insbesondere eine Folie, die eine Bewehrung in Form eines Drahtgitters aufweist, das in einer plastisch verformbaren Dispersionsschicht eingebettet ist. Durch einen ungeradlinigen Verlauf der Bewehrungsdrähte soll gewährleistet sein, daß sich die Folie plastisch sehr gut verformen läßt. Bei der Herstellung werden die einzelnen Materialschichten in zeitlicher Abfolge nacheinander hergestellt und zusammengefügt. Dazu wird eine erste Dispersionsschicht auf eine Teflonunterlage gesprüht, auf die dann später die Bewehrung aufgebracht wird. Dann erfolgt die nächste Dispersionsbeschichtung usw.

Die DE 36 42 063 C2 zeigt die sogenannte Abdeckmaterialbahn Wakaflex (eingetragene Marke) mit einer plastisch modellierbaren Metalleinlage, die in einer Elastomerschicht eingebettet ist. Die Metalleinlage ist als Streckmetallgitter ausgebildet, das plastisch verformbar ist und daher gedehnt werden kann. Die mit dem Streckgitter unmittelbar verbundene Elastomerschicht folgt einer derartigen Verformung oder Dehnung des Streckmetallgitters.

Der Nachteil oben genannter beschichteter Gitternetzbahnen liegt darin, daß bei einer Verformung oder Dehnung der Materialbahn die Abdeckmaterialschicht ausdünnt, da sie der Dehnung des Gitternetzes unmittelbar folgt, was dann zu Undichtigkeiten führen kann. Diese Gefahr einer Ausdünnung erhöht sich dementsprechend, je öfter die Materialbahn gebogen oder gedehnt wird.

Die Aufgabe der Erfindung liegt nun darin, eine plastisch verformbare Materialbahn aus einem beschichteten Gitternetz zu schaffen, die ihre wetterbeständige und abdichtende Funktion durch ein Verbiegen oder eine Dehnung der Materialbahn nicht verliert und diesbezüglich an einer Biege- oder Dehnstelle keine Ausdünnung der Abdeckmaterialschicht aufweist. So ist es darüber hinaus eine Aufgabe der Erfindung, eine plastisch verformbare Materialbahn zu schaffen, die problemlos engen Biegungen angepaßt werden kann, und sich damit für einen Einsatz an äußerst unebenen, abgewinkelten oder kantigen Stellen eignet. Die Materialbahn soll desweiteren annähernd beliebig oft verformt werden können, ohne daß die Abdeckmaterialschicht ausdünnt. Die Abdeckmaterialschicht soll zudem möglichst dünn auf das Gitternetz auftragbar sein, und die örtlich sehr hohen Dehnungen des Gitternetzes sollen nicht mit einer dickeren Abdeckmaterialschicht kompensiert werden.

Desweiteren ist es eine Aufgabe der Erfindung, ein Herstellungsverfahren aufzuzeigen, mit dem eine derartige beschichtete Gitternetzbahn auf einfache Weise hergestellt werden kann.

Die Aufgabe der Erfindung wird gelöst durch die Merkmale der Ansprüche 1 und 12 und 16. Vorteilhafte Weiterbildungen der Erfindungen sind Gegenstand der jeweiligen Unteransprüche.

Grundgedanke der Erfindung ist es, bei einer beschichteten Gitternetzbahn die Dehnung der Abdeckmaterialschicht von der Dehnung des Gitternetzes zu entkoppeln. So ist erfindungsgemäß eine Zusatzschicht als Grenzkleberschicht, vorzugsweise eine Haftschmelzkleberschicht vorgesehen, über die das Streckgitter mit der Abdeckmaterialschicht gleitbar verbunden ist. Diese Schicht sollte daher gute Gleiteigenschaften und/oder eine geringere Viskosität als die Abdeckamterialschicht aufweisen. Die örtlich sehr hohen Dehnungen des Gitternetzes werden dann in der Grenzschicht aufgefangen, indem das Gitter in dieser Vermittlungsschicht gleitet, so daß nur eine gleichmäßige Dehnung auf die Abdeckmaterialschicht übertragen wird. Dehnungen in der Abdeckmaterialschicht selbst werden dadurch weitaus geringer gehalten und gleichmäßig verteilt. Dadurch ist es möglich, auch bei sehr hohen Verformungen der Materialbahn sehr dünne Abdeckmaterialschichten einzusetzen.

Durch die Erfindung können vorzugsweise Gitternetze mit einer extrem hohen Dehnbarkeit zum Einsatz kommen. So wird in einer vorteilhaften Weiterbildung der Erfindung ein Streckmetallgitter gemäß der DE 199 10 312.7 verwendet, das aus einem Netzwerk von Gitterstegen und Gitterknoten besteht, wobei einzelne Gitterknoten als Sollbruchstellen ausgebildet sind. Bei einer Dehnung eines derartigen Streckmetallgitters können diese als Sollbruchstellen ausgebildeten Gitterknoten aufbrechen. Dadurch ist eine Dehnung des Streckmetallgitters von nahezu 100 % möglich. Um bei der Verwendung eines solchen Streckmetallgitters die Festigkeit und den Materialaufwand der Materialbahn im Randbereich nicht negativ zu beeinträchtigen, zeigt das Streckmetallgitter vorzugsweise einen Rahmenbereich von ca. 1 bis 5 cm, der nur Gitterknoten enthält, die nicht als Sollbruchstellen ausgebildet sind. Hierdurch wird die Einreißfestigkeit des Randes erhöht, d.h. die Grundfestigkeit des Streckmetallgitters kann dadurch relativ gering gewählt werden.

Je nach Anforderung im Innen- bzw. Außenbereich von Gebäuden kann die Abdeckmaterialschicht vorzugsweise auf beiden Seiten des Gitternetzes angeordnet sein. Eine kostengünstige Ausführung der Erfindung sieht eine einseitig auf das Gitternetz aufgebrachte Abdeckmaterialschicht vor, die in einem Randbereich des Gitternetzes von ca. 15 mm um das Gitternetz herumgelegt ist. Dadurch werden scharfe Kanten der Materialbahn vermieden und gleichzeitig die Festigkeit des Randes erhöht.

In einer vorteilhaften Ausführung der Erfindung besteht die Abdeckmaterialschicht aus einer Schmelzkleberschicht. Im allgemeinen ist es dann von Vorteil, wenn ein Schmelzkleber verwendet wird, der eine gute Temperaturbeständigkeit zeigt. Beispielsweise ist es möglich, einen Schmelzkleber auszuwählen, der den Wetterbedingungen angepaßt ist und diesen standhält. Dann fungiert die Schmelzkleberschicht als äußerste Abdeck- oder Abdichtschicht. Darüber hinaus ist es möglich, die Schmelzkleberschicht vorzugsweise mit einer weiteren Beschichtung abzudecken, die sowohl witterungsbeständig als auch dehnfähig ist. Eine solche Zusatzschicht könnte z.B. eine Acryldispersion oder ein Chlorkautschuklack sein. Damit könnten geringere Anforderungen an die Abdeckmaterialschicht selbst gestellt werden, da sie nun nicht mehr dem Wetter ausgesetzt ist. Statt der Schmelzkleberschicht kann vorzugsweise auch ein Abdeckmaterial verwendet werden, das einen Synthesekautschuk, beispielsweise Butylkautschuk enthält. Diesbezüglich ist die Rezeptur der Butylkautschuk enthaltenden Abdeckschicht so zu wählen, daß diese duktil ist und dennoch keinen sogenannten "kalten Fluß" zeigt, d.h., daß sie bei Raumtemperatur nicht bereits fließt und demzufolge bei hohen Dachtemperaturen nicht durch die Streckgittermaschen einsackt, so daß Löcher in der Materialbahn entstehen können.

In einer Ausführungsform der Erfindung ummantelt die zwischen dem Gitternetz und der Abdeckmaterialschicht angeordnete Grenzschicht aus beispielsweise einem Haftschmelzkleber das Gitternetz vorzugsweise vollständig. In dieser Ausführungsform ist das Gitternetz an den Gitterstegen und Gitterknoten dann von dem Haftschmelzkleber eng umschlossen. Das Gitter gleitet mittels seiner Grenzkleberummantelung an der Abdeckmaterialschicht, wodurch diese gleichmäßig gedehnt wird. Dadurch wird gleichzeitig ein wirksamer Korrosionsschutz des Gitternetzes geschaffen, wenn es ein Streckgitter aus Metall ist.

In einer anderen Ausführung ist es jedoch ebenso möglich, die Grenzkleberschicht nur einseitig auf das Gitternetz aufzutragen. Dann steht das Gitternetz in unmittelbarem Kontakt mit der Abdeckmaterialschicht, wobei das Gitternetz zwischen den Gitterstegen über den Kontakt des Grenzklebers mit der Abdeckmaterialschicht festgehalten wird. Das Gitter gleitet in der Grenzkleberschicht, womit eine zu starke Dehnung der Abdeckmaterialschicht vermieden wird.

Soll nach obiger Ausführung der Grenz- oder Zwischenkleber das Gitternetz vollständig ummanteln, wird bei der Herstellung der Materialbahn die Grenzkleberschicht zunächst in flüssiger Phase auf das Gitternetz aufgebracht. Darauffolgend wird nach Aushärtung des Grenzklebers das mit Grenzkleber ummantelte Gitternetz auf die Abdeckmaterialschicht kaschiert. Analog ist es möglich, nach Aushärten des Grenzklebers die Abdeckmaterialschicht in flüssiger Phase auf das mit dem Grenzkleber ummantelte Gitternetz aufzutragen. Hierzu kann die Abdeckmaterialschicht beispielsweise aufgesprüht werden oder das vorpräparierte Gitternetz in die flüssige Abdeckmaterialschicht eingetaucht werden.

In einem vorteilhaften Herstellungsverfahrert wird das Gitternetz zunächst auf die Unterseite einer festen Abdeckmaterialschicht leicht eingewalzt und darauffolgend der Grenzkleber auf die Unterseite des Gitternetzes dünn aufgetragen.

Ebenso ist es möglich, den Grenzkleber in Form einer Haftfolie auf das Gitternetz aufzutragen.

Die Erfindung wird nachfolgend anhand von Beispielen mit Hilfe einer schematischen Zeichnung beschrieben.
Diese zeigt in
- Fig. 1: einen schematischen Querschnitt der Materialbahn zur Verdeutlichung der Erfindung,
- Fig. 2: einen vergrößerten Querschnitt einer ersten Ausführungsform mit einem ummantelten Streckgitter, und
- Fig. 3: einen vergrößerten Querschnitt einer zweiten Ausfüh-rungsform mit einer einseitig mit Grenzkleber beschichteten Materialbahn.

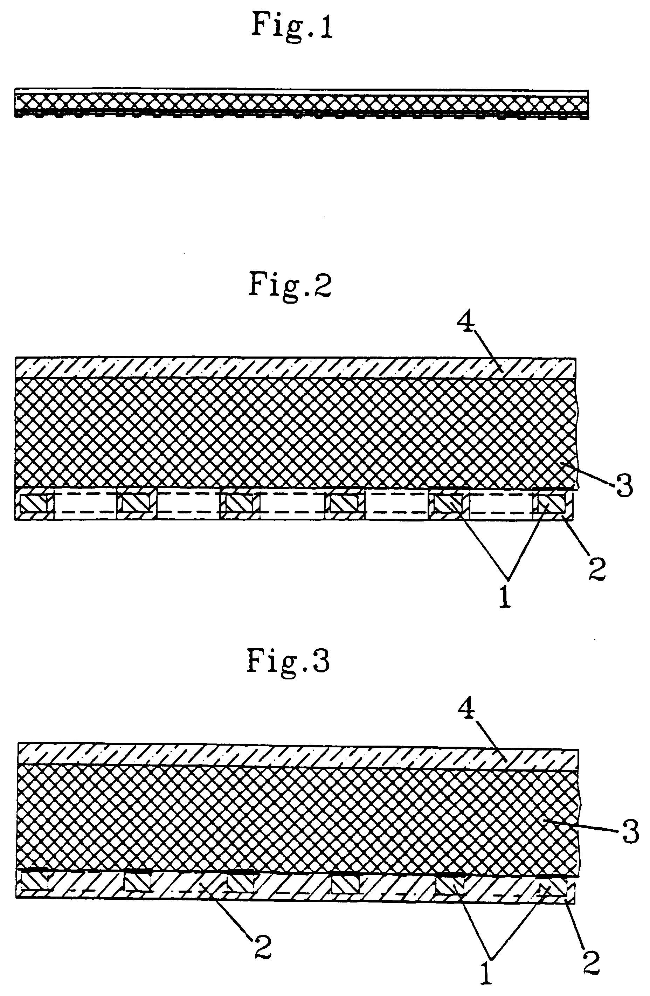

Fig. 1 zeigt den Aufbau der erfindungsgemäßen Materialbahn im Querschnitt. Die unterste Schicht bildet das mit einem Grenzkleber 2 versehene Streckmetallgitter 1, das mit einer Abdeckmaterialschicht 3 verbunden ist. Eine witterungsbeständige Wetterschicht 4 deckt hierbei die Abdeckmaterialschicht 3 ab. Als Grenzkleber wird ein Haftschmelzkleber verwendet.

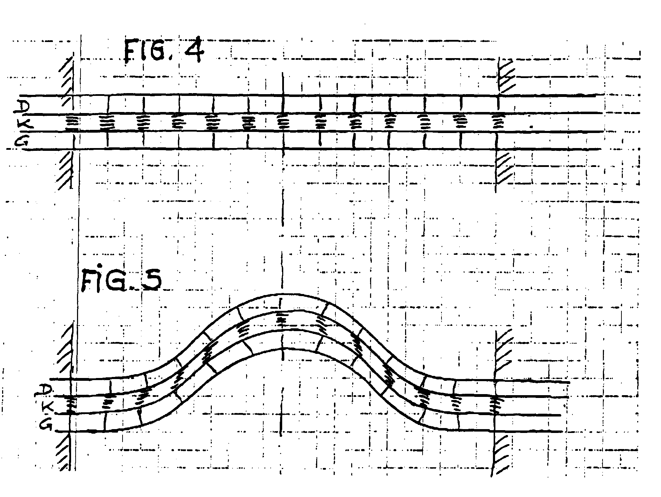

Fig. 2 zeigt eine Ausführungsform in vergrößertem Maßstab. Deutlich zu erkennen sind die mit einem Haftschmelzkleber 2 ummantelten Gitterstege 1. Durch diese Ummantelung bildet die Haftschmelzkleberschicht 2 die gleitende Verbindung zwischen dem Gitternetz 1 und der Abdeckmaterialschicht 3. Dadurch ist es möglich, Dehnungen und Verformungen des Streckmetallgitters 1 in der Grenzschicht 2 aufzufangen und nicht in gleichem Maß auf die Abdeckmaterialschicht 3 zu übertragen. Die oberste Schicht bildet die witterungsbeständige Wetterschicht 4.

Fig. 3 zeigt eine zweite Ausführungsform der Erfindung, bei der das Streckgitter 1 leicht auf der Unterseite der Abdeckmaterialschicht 3 aufgewalzt ist. Anschließend wird an der Unterseite des Streckmetallgitters 1 ein Haftschmelzkleber 2 aufgetragen ist. Der Haftschmelzkleber 2 schafft hier eine gleitfähige Verbindung zwischen dem Streckmetallgitter 1 und der Abdeckmaterialschicht 3. Aufgrund dieser Verbindung ist das Streckmetallgitter 1 zwischen dem Haftschmelzkleber 2 und der Abdeckmaterialschicht 3 vollständig eingebettet und kann in der Haftschmelzkleberschicht gleiten, ohne daß die Abdeckmaterialschicht selbst stark verformt wird. Die Grenz- oder Haftschmelzkleberschicht dient somit als Vermittler, der einerseits das Gitter 1 mit der Abdeckmaterialschicht 3 mechanisch verbindet, andererseits aber die beiden Schichten hinsichtlich ihrer Verformungen in der Schichtebene entkoppelt.

Für den Fachmann ist es offensichtlich, daß die Materialbahn der vorliegenden Erfindung mit einer Vielzahl unterschiedlicher Materialien kombiniert werden kann. So ist es ebenso möglich ein Gitternetz aus beispielsweise Kunststoff zu verwenden oder verschiedenste Materialien, wie z.B. Butylkautschuk oder Haftschmelzkleber für die Abdeckmaterialschicht einzusetzen. Darüber hinaus ist es offensichtlich, daß die erfindungsgemäße Materialbahn in verschiedenen Dicken hergestellt werden kann und bei entsprechender Stärke auch im Tiefbau für Kanal, Gulli oder Erdanschlüsse einsetzbar ist, sowie für Fundament- oder Tunnelabdichtungen gegen drückendes Wasser. Ferner ist eine Abdichtung von Behältern oder Lagern für grundwasserschädliche Stoffe wie beispielsweise Tanklagern, Mülldeponien, Jauchegruben, sowie Isolierungen von Zisternen oder Wasserbecken möglich.

Die beigefügten Figuren 4 und 5 zeigen schematische Querschnitte der Materialbahn im unverformten Zustand und nach einer bleibenden Verformung. Das Formgitter G erlaubt eine bleibende Formgebung z.B. gemäß Figur 5 mit hoher lokaler Dehnung (bis 200 oder gar 500 %) bei bleibendem Formhaltevermögen. Die Klebeschicht K erlaubt Verschiebungen zwischen dem Formgitter G und dem Deckmaterial D, bindet beide Schichten jedoch aneinander wie biologisches "Bindegewebe". Die Deckmaterialschicht D hat eine begrenzte Dehnbarkeit von z.B. 20 bis 30 %.

Die hohen lokalen Verformungen des Formgitters G werden also von der Kleberschicht K aufgefangen und "vergleichmäßig" auf die Deckmaterialschicht D übertragen, so dass diese nicht ausdünnt oder gar reißt. Die hohe Dehnbarkeit der Kleberschicht muß bei den Gebrauchstemperaturen der Materialbahn erhalten bleiben. Die Dehnung der Kleberschicht kann plastisch erfolgen. Soweit elastische Dehnung erfolgt, müssen die elastischen Rückstellkräfte gering bleiben, damit die Gitterverformung nicht rückgängig gemacht wird.

Als geeignete Materialien für die Kleberschicht K kommen kautschukähnliche Kleber oder auch Silikon in Frage.

## Patentansprüche

1. Plastisch verformbare Materialbahn, die ein plastisch modellierbares Gitternetz (1) und mindestens eine verformbare Abdeckmaterialschicht (3) umfasst, die mit dem Gitternetz verbunden ist,
dadurch gekennzeichnet, dass zur Verbindung des Gitternetzes (1) mit der Abdeckmaterialschicht (3) eine Grenz- oder Zwischenkleberschicht (2) mit einer solchen Viskosität vorgesehen ist, dass das Gitter bei Verformungen in bzw. mit dieser Schicht (2) gleitet und dadurch die Dehnung der Abdeckmaterialschicht (3) von der Dehnung des Gitternetztes (1) entkoppelt wird.

2. Materialbahn nach Anspruch 1,
dadurch gekennzeichnet, dass die Grenz- oder Zwischenkleberschicht (2) aus einem Haftschmelzkleber besteht.

3. Materialbahn nach Anspruch 1 und 2,
dadurch gekennzeichnet, dass das Gitternetz (1) ein Streckmetall aus einem Netzwerk von Gitterstegen und Gitterknoten ist, und einzelne Gitterknoten als Sollbruchstellen ausgebildet sind.

4. Materialbahn nach Anspruch 3,
dadurch gekennzeichnet, dass das Gitternetz (1) einen Rahmenbereich von vorzugsweise ca. 1 bis 5 cm umfaßt, der nur Gitterknoten enthält, die nicht als Sollbruchstellen ausgebildet sind.

5. Materialbahn nach einem der vorangehenden Ansprüche,
dadurch gekennzeichnet, dass die Abdeckmaterialschicht (3) auf beiden Seiten des Gitternetzes (1) angeordnet ist.

6. Materialbahn nach einem der Ansprüche 1-4,
dadurch gekennzeichnet, dass die Abdeckmaterialschicht (3) einseitig auf das Gitternetz (1) aufgebracht ist und in einem Randbereich des Gitternetzes von vorzugsweise ca. 15 mm um das Gitternetz (1) herumgelegt ist.

7. Materialbahn nach einem der vorangehenden Ansprüche,
dadurch gekennzeichnet, dass die Abdeckmaterialschicht (3) eine Schmelzkleberschicht ist.

8. Materialbahn nach Anspruch 7,
dadurch gekennzeichnet, dass die Schmelzkleberschicht mit einer wetterbeständigen Beschichtung (4) überdeckt ist, wie beispielsweise einer Acryldispersion oder einem Chlorkautschuklack.

9. Materialbahn nach einem der Ansprüche 1-6,
dadurch gekennzeichnet, dass die Abdeckmaterialschicht (3) Synthesekautschuk, beispielsweise Butylkautschuk enthält.

10. Materialbahn nach einem der vorangehenden Ansprüche,
dadurch gekennzeichnet, dass die Grenzkleberschicht (2) das Gitternetz (1), insbesondere die Gitterstege und Gitterknoten vollständig ummantelt.

11. Materialbahn nach einem der Ansprüche 1-9,
dadurch gekennzeichnet, dass die Grenzkleberschicht (2) einseitig auf die Materialbahn (1) aufgetragen ist.

12. Verfahren zur Herstellung einer plastisch verformbaren Materialbahn, die ein plastisch modellierbares Gitternetz (1) und mindestens eine verformbare Abdeckmaterialschicht (3) umfaßt, gekennzeichnet durch
- das Auftragen einer Grenzkleberschicht (2) auf das Gitternetz (1) und
- das Verbinden der Abdeckmaterialschicht (3) mit dem Gitternetz (1), welche Grenzkleberschicht (2) eine solche Viskosität besitzt, dass das Gitter bei Verformungen in bzw. mit dieser Schicht (2) gleitet und dadurch die Dechnung der Abdeckmaterialschicht (3) von der Dehnung des Gitternetzes (1) entkopppelt wird.

13. Verfahren nach Anspruch 12,
dadurch gekennzeichnet, dass zunächst die Grenzkleberschicht (2) in flüssiger Phase auf das Gitternetz (1) aufgebracht wird, um dieses vollständig zu ummanteln, und darauffolgend nach Aushärten der Grenzkleberschicht (2) das ummantelte Gitternetz (1) auf die Abdeckmaterialschicht (3) kaschiert wird.

14. Verfahren nach Anspruch 12,
dadurch gekennzeichnet, dass zunächst die Grenzkleberschicht (2) in flüssiger Phase auf das Gitternetz (1) aufgebracht wird, um dieses vollständig zu ummanteln, und darauffolgend nach Aushärten der Grenzkleberschicht (2) die Abdeckmaterialschicht (3) in flüssiger Phase auf das ummantelte Gitternetz aufgebracht, beispielsweise aufgesprüht wird.

15. Verfahren nach Anspruch 12,
dadurch gekennzeichnet, dass der Grenzkleber in Form einer Haftfolie auf das Gitternetz (1) aufgetragen wird, und darauffolgend die Abdeckmaterialschicht (3) auf die Haftfolie aufgebracht wird.

16. Verfahren zur Herstellung einer plastisch verformbaren Materialbahn, die ein plastisch modellierbares Gitternetz (1) und mindestens eine verformbare Abdeckmaterialschicht (3) umfaßt, dadurch gekennzeichnet, dass zunächst das Gitternetz (1) auf die Unterseite der Abdeckmaterialschicht (3) leicht aufgewalzt wird und darauffolgend die Grenzkleberschicht (2) unterseitig auf den Verbund von Gitternetz (1) und Abdeckmaterialschicht (3) dünn aufgetragen wird, welche Grenzkleberschicht (2) eine solche Viskosität besitzt, dass das Gitter bei Verformungen in bzw. mit dieser Schicht (2) gleitet und dadurch die Dehnung der Abdeckmaterialschicht (3) von der Dehnung des Gitternetzes (1) entkoppelt wird.
